# EUROPÄISCHE PATENTSCHRIFT

(11) **EP 0 494 396 B1**
(45) Veröffentlichungstag und Bekanntmachung des Hinweises auf die Patenterteilung: **25.01.1995**
(21) Anmeldenummer: 91121293.4
(22) Anmeldetag: 12.12.1991
(51) Int. Cl.: H02B 1/56

(54) **Gekapseltes elektrisches Schaltfeld**
Electrical metal-clad switchboard
Tableau de distribution électrique blindé

(30) Priorität: 10.01.1991 CH 55/91
(43) Veröffentlichungstag der Anmeldung: 15.07.1992
(73) Patentinhaber: GEC Alsthom T&D AG, 5036 Oberentfelden (CH)
(72) Erfinder: Wüthrich, Hans-Rudolf, CH-5036 Oberentfelden (CH)
(74) Vertreter: Patentanwälte Schaad, Balass, Menzl & Partner AG

(56) Entgegenhaltungen:
- DE-A- 3 617 231
- DE-U- 8 915 141
- FR-A- 1 554 277
- US-A- 2 362 798
- PATENT ABSTRACTS OF JAPAN, vol. 4, no. 8 (E-166), 22. Januar 1980 ; & JP-A-54 148 240

## Beschreibung

Die Erfindung betrifft ein gekapseltes elektrisches Schaltfeld für Mittelspannung nach dem Oberbegriff des Anspruches 1.

Will man solche Schaltfelder mit hohem Nennstrom betreiben, so muss dem Abtransport der im Kontakt des Vakuumschalters erzeugten Wärme besondere Aufmerksamkeit geschenkt werden.

Beim bekannten Schaltfeld nach dem DE-GM 89 15 141 belegt der Luftverteilkanal die ganze Grundfläche des Vakuumschalters. Die Kühlluft wird von der Bedienungsseite her angezogen. Um zu verhindern, dass im Falle einer Lichtbogenstörung im Leistungsschalterraum das Bedienungspersonal durch rückwärts durch den Luftverteilkanal strömende heisse Gase gefährdet wird, ist im Luftverteilkanal eine Rückschlagklappe eingebaut. Diese Rückschlagklappe bedingt, dass der Luftverteilkanal mit gegen die Bedienungsseite hin zunehmender Höhe gebaut werden muss. Dadurch wird aber die Zugänglichkeit zum Kabelanschlussraum von vorne stark beeinträchtigt. Zudem ist die Sicherheit des Bedienungspersonals stark vom zuverlässigen Funktionieren der Rückschlagklappe abhängig.

Die Aufgabe der Erfindung besteht darin, eine Leistungsschalterbelüftung zu schaffen, die die Zugänglichkeit zum Kabelanschlussraum nicht beeinträchtigt, und die Sicherheit des Betriebspersonals im Falle einer Lichtbogenstörung im Leistungsschalterraum nicht vom richtigen Funktionieren einer Rückschlagklappe abhängig macht.

Dies gelingt erfindungsgemäss durch die kennzeichnenden Merkmale des Anspruches 1.

Wird in einer Weiterbildung der Erfindung der Leistungsschalterraum oben mit einer Abdeckung mit einer Auslassöffnung abgeschlossen, kann der Einlass der Kühlluft vom Auslass örtlich getrennt werden. Dadurch wird verhindert, dass erwärmte Abluft erneut in den Einlass gelangt.

In einer weiteren bevorzugten Ausgestaltung der Erfindung ist die Auslassöffnung mit einem Aufsatz versehen, dessen oberes Ende höher liegt als die oberen Enden der Zuluftschächte. Dadurch ergibt sich eine kaminartige Wirkung, so dass eine Kühlluftströmung ohne den Einsatz von Ventilatoren zustande kommt.

Die Kühlwirkung kann durch das Anordnen von Ventilatoren in der Auslassöffnung oder/und in den Zuluftschächten verstärkt werden.

Der Luftverteilkanal und die Zuluftschächte werden üblicherweise aus Metall gefertigt. Treten dabei dielektrische Probleme auf, können diese Teile auch aus Isoliermaterial gefertigt werden.

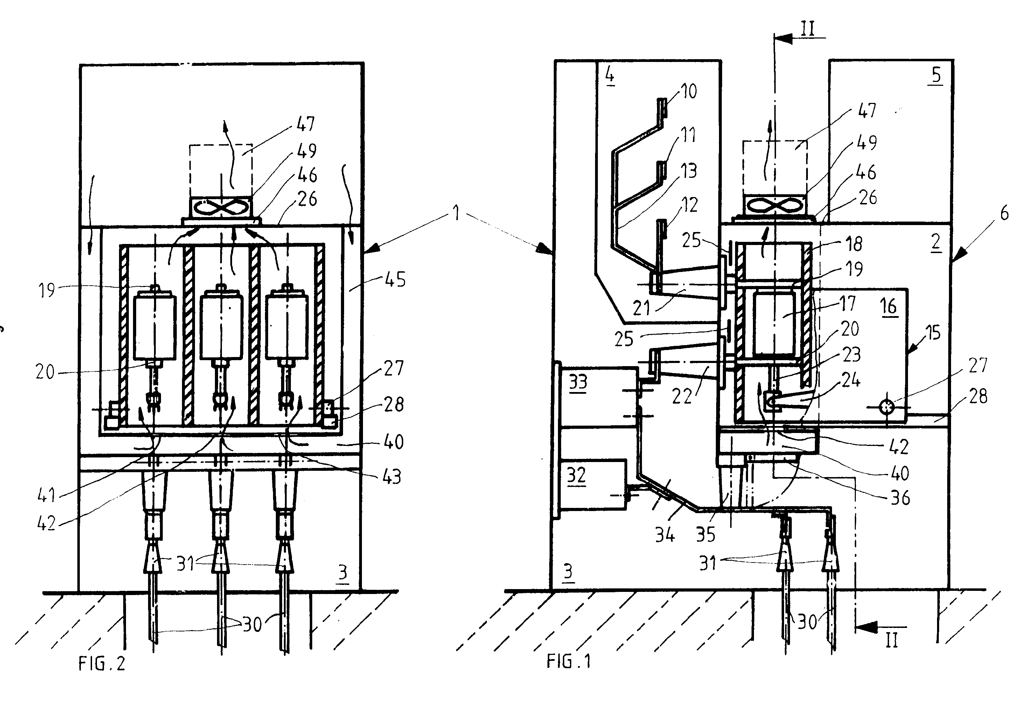

Anhand der Zeichnungen soll die Erfindung näher erläutert werden. Es zeigt Fig.1 einen vertikalen Schnitt durch ein erfindungsgemässes Schaltfeld in einer Ebene senkrecht zur Richtung der Sammelschienen, Fig.2 einen Schnitt gemäss der Linie II - II in Fig. 1 durch das gleiche Schaltfeld.

Das Schaltfeld 1 besteht aus einem Leistungsschalterraum 2, einem Kabelanschlussraum 3 und einem Sammelschienenraum 4. Diese Räume sind gegeneinander geschottet und erstrecken sich alle bis zur Oberseite des Schaltfeldes, wo Druckentlastungsklappen (nicht dargestellt) angebracht sind, die im Falle einer Lichtbogenstörung in einem der Räume den entsprechenden Raum vor dem durch den Störlichtbogen erzeugten Druck schützen. Ein über dem Leistungsschalterraum 2 auf der Bedienungsseite 6 angebrachter Niederspannungskasten 5 dient nicht nur zur Aufnahme der für den Betrieb des Schaltfeldes nötigen Mess-, Schutz- und Steuergeräte, sondern schützt das Betriebspersonal vor den im Falle einer Lichtbogenstörung austretenden heissen Gase. Im Sammelschienenraum 4 verlaufen senkrecht zur Zeichnungsebene von Fig.1 die Sammelschienen 10, 11, 12. Sie sind mittels Verbindungsleitern 13 mit Durchführungen 21 verbunden. Gleiche Durchführungen 22 befinden sich unterhalb davon im Kabelanschlussraum 3.

Im Leistungsschalterraum 2 ist ein Vakuumschalter 15 mittels Fahrrollen 27 auf Fahrschienen 28 verfahrbar angeordnet. Der Vakuumschalter 15 enthält drei Unterbrecher 17, die jede für sich in einem oben und unten offenen Isolierrohr 18 von rundem oder rechteckigem Querschnitt untergebracht sind. Die Isolierrohre 18 sind zusammen mit dem Rahmen des Schalterantriebs 16 einstückig aus Kunststoff gefertigt und bilden zugleich auch den Rahmen des Vakuumschalters. Der bewegliche Kontakt 23 wird über einen Antriebshebel 24 durch den Schalterantrieb 16 betätigt. Die Anschlussleiter 19, 20 dienen einerseits zur Halterung der Unterbrecher 17 in den Isolierrohren 18, anderseits verbinden sie die Vakuumschaltröhren mit in den Durchführungen 21, 22 sich befindenen (nicht dargestellten) Trennkontakten. Wird der Vakuumschalter 15 auf seinen Fahrrollen 27 zurückgezogen, trennen die Trennkontakte, und der Vakuumschalter 15 ist sowohl von den Sammelschienen 10, 11, 12 als auch vom Kabelabgang getrennt. Gleichzeitig schieben sich Blenden 25 vor die Oeffnungen der Durchführungen 21, 22, die verhindern, dass die blanken feststehenden Kontaktstücke der Trennkontakte berührt werden können.

An den Durchführungen 22 sind im Kabelanschlussraum 3 über Verbindungsleiter 34, Stromwandler 33 und Spannungswandler 32 die Kabel 30 mittels Kabelendverschlüssen 31 angeschlossen. Stützisolatoren 35 stützen die Verbindungsleiter 34 ab und dienen zugleich als Träger für die Kontaktstücke eines Erdtrenners 36.

Quer unter den Unterbrechern 17 durch verläuft ein Luftverteilkanal 40. Dieser weist auf seiner Oberseite Auslassöffnungen 41, 42, 43 auf, die mit den Unterbrechern fluchten, wenn der Vakuumschalter in der Einfahrstellung ist.

Erfindungsgemäss münden in diesen Luftverteilkanal von oben zwei Zuluftschächte 45, die seitlich an den Wänden des Leistungsschalterraumes 2 angeordnet sind. Ueber dem Leistungsschalterraum 2 ist eine Abdeckung 26 mit einer einzigen Auslassöffnung 46 angebracht. Die Abdeckung 26 überdeckt den ganzen Leistungsschalterraum 2 mit Ausnahme der Einlassöffnungen am oberen Ende der Zuluftschächte 45, soweit der Leistungsschalterraum nicht durch den Niederspannungskasten 5 bereits abgedeckt ist. Vorzugsweise ist die Abdeckung 26 mit (nicht gezeigten) Druckentlastungsklappen versehen.

In die Auslassöffnung 46 ist ein Ventilator 49 eingelassen. Er sorgt für die zur Kühlung der Unterbrecher 17 notwendige Luftumwälzung, indem Luft durch die zuluftschächte 45, den Luftverteilkanal 40, seine Auslassöffnungen 41, 42, 43 und den freien Querschnitt zwischen den Unterbrechern 17 und den Isolierrohren 18 gesogen wird.

Vorteilhafterweise wird auf die Auslassöffnung 46 ein zylindrischer Aufsatz 47 aufgesetzt, wie in den Zeichnungen mit gestrichelten Linien angedeutet. Das obere Ende dieses Aufsatzes liegt dann höher als die durch die oberen Enden der Zuluftschächte 45 gebildeten Ansaugöffnungen. Dadurch entsteht eine kaminartige Wirkung, so dass eine Kühlluftströmung auch ohne die Hilfe des Ventilators zustandekommt. Wenn kein grosser Bedarf an Kühlluft da ist, kann deshalb auf den Ventilator verzichtet werden.

Alternativ oder in Ergänzung zum Ventilator 49, können auch in die Zuluftschächte 45 Ventilatoren eingebaut werden.

## Patentansprüche

1. Gekapseltes elektrisches Schaltfeld (1) für Mittelspannung mit folgenden Merkmalen:
- das Schaltfeld besteht aus je einem Sammelschienen-(4), Leistungsschalter- (2) und Kabelanschlussraum (3), sowie einem auf dem Leistungsschalterraum (2) aufgesetzen Niederspannungskasten (5),
- diese Räume sind gegeneinander geschottet,
- der Kabelanschlussraum (3) erstreckt sich unter dem Leistungsschalterraum (2) hindurch bis zur Bedienungsseite (6) des Schaltfeldes,
- die aufrecht stehenden Unterbrecher (17) des ausziehbaren Vakuumschalters (15) sind mit Abstand von Isolierrohren (18) umgeben, die oben und unten offen sind,
- unter den Unterbrechern (17) verläuft ein Luftverteilkanal (40), der gegen den Kabelanschlussraum (3) geschottet und oben mit Auslassöffnungen (41, 42, 43) versehen ist, die mit den Unterbrechern fluchten,
**dadurch gekennzeichnet**, dass in den Luftverteilkanal (40) von oben Zuluftschächte (45) münden, die seitlich an den Wänden des Leistungsschalterraumes (2) angeordnet sind.

2. Gekapseltes elektrisches Schaltfeld nach Anspruch 1, **dadurch gekennzeichnet**, dass der Leistungsschalterraum (2) oben mit einer Abdeckung (26) mit einer Auslassöffnung (46) abgeschlossen ist.

3. Gekapseltes elektrisches Schaltfeld nach Anspruch 2, **dadurch gekennzeichnet**, dass die Auslassöffnung (46) mit einem Aufsatz (47) versehen ist, dessen oberes Ende höher liegt als die oberen Enden der Zuluftschächte (45).

4. Gekapseltes elektrisches Schaltfeld nach einem der Ansprüche 2 oder 3, **dadurch gekennzeichnet**, dass in der Auslassöffnung (46) ein Ventilator (49) angeordnet ist.

5. Gekapseltes elektrisches Schaltfeld nach einem der Ansprüche 1 bis 4, **dadurch gekennzeichnet**, dass in den Zuluftschächten (45) Ventilatoren angeordnet sind.

6. Gekapseltes elektrisches Schaltfeld nach einem der Ansprüche 1 bis 5, **dadurch gekennzeichnet**, dass der Luftverteilkanal (40) aus Metall gefertigt ist.

7. Gekapseltes elektrisches Schaltfeld nach einem der Ansprüche 1 bis 5, **dadurch gekennzeichnet**, dass der Luftverteilkanal (40) aus Isoliermaterial gefertigt ist.

8. Gekapseltes elektrisches Schaltfeld nach einem der Ansprüche 1 bis 7, **dadurch gekennzeichnet**, dass die Zuluftschächte (45) aus Metall gefertigt sind.

9. Gekapseltes elektrisches Schaltfeld nach einem der Ansprüche 1 bis 7, **dadurch gekennzeichnet**, dass die Zuluftschächte (45) aus Isoliermaterial gefertigt sind.

## Claims

1. Encapsulated electrical switch panel (1) for medium voltage having the following features:
- the switch panel consists in each case of a busbar area (4), a circuit breaker area (2) and a cable connection area (3), as well as a low-voltage box (5) fitted on top of the circuit breaker area (2),
- these areas are partitioned from one another,
- the cable connection area (3) extends under the circuit breaker area (2) up to the operating side (6) of the switch panel,
- the upright interrupters (17) of the withdrawable vacuum switch (15) are surrounded at a distance by insulating pipes (18) which are open at the top and bottom,
- an air distribution channel (40) runs under the interrupters (17), is partitioned from the cable connection area (3) and provided at the top with outlet openings (41, 42, 43) which are aligned with the interrupters,
characterized in that air feed shafts (45), which are arranged laterally on the walls of the circuit breaker area (2), open into the air distribution channel (40) from above.

2. Encapsulated electrical switch panel according to Claim 1, characterized in that the circuit breaker area (2) is closed at the top by means of a cover (26) having an outlet opening (46).

3. Encapsulated electrical switch field according to Claim 2, characterized in that the outlet opening (46) is provided with a top (47) whose upper end is higher than the upper ends of the air feed shafts (45).

4. Encapsulated electrical switch field according to one of Claims 2 or 3, characterized in that a ventilator (49) is arranged in the outlet opening (46).

5. Encapsulated electrical switch field according to one of Claims 1 to 4, characterized in that ventilators are arranged in the air feed shafts (45).

6. Encapsulated electrical switch field according to one of Claims 1 to 5, characterized in that the air distribution channel (40) is manufactured from metal.

7. Encapsulated electrical switch field according to one of Claims 1 to 5, characterized in that the air distribution channel (40) is manufactured from insulating material.

8. Encapsulated electrical switch field according to one of Claims 1 to 7, characterized in that the air feed shafts (45) are manufactured from metal.

9. Encapsulated electrical switch field according to one of Claims 1 to 7, characterized in that the air feed shafts (45) are manufactured from insulating material.

## Revendications

1. Tableau de distribution électrique (1) blindé pour moyenne tension, présentant les caractéristiques suivantes :
- le tableau de distribution est respectivement composé d'une enceinte pour barre collectrice (4), pour interrupteur de puissance (2) et pour raccordement par câble (3), ainsi que d'un boîtier basse tension (5), placé sur l'enceinte d'interrupteur de puissance (2),
- ces enceintes sont cloisonnées les unes par rapport aux autres,
- l'enceinte de raccordement par câble (3) s'étend au-dessous de l'enceinte d'interrupteur de puissance (2), jusqu'à atteindre la face de manoeuvre (6) de la tableau de distribution,
- les interrupteurs (17), placés verticalement, de l'interrupteur à vide (15) extractible, sont entourés à distance par des tubes isolants (18), ouverts en partie haute et en partie basse,
- sous les interrupteurs (17) s'étend un canal distributeur d'air (40), cloisonné vis-à-vis de l'enceinte de raccordement par câble (3) et pourvu, en partie haute, d'ouvertures d'évacuation (41, 42, 43), alignées avec les interrupteurs,
caractérisé en ce que, dans le canal distributeur d'air (40) débouchent par le haut des cheminées d'amenée d'air (45) disposés latéralement sur les parois de l'enceinte d'interrupteur de puissance (2).

2. Tableau de distribution électrique blindé selon la revendication 1, caractérisé en ce que l'enceinte d'interrupteur de puissance (2) est délimitée en partie haute par un recouvrement (26) doté d'une ouverture d'échappement (46).

3. Tableau de distribution électrique blindé selon la revendication 2, caractérisé en ce que l'ouverture d'échappement (46) est pourvue d'une garniture (47) dont l'extrémité supérieure est située à un niveau plus élevé que les extrémités supérieures des cheminées d'amenée d'air (45).

4. Tableau de distribution électrique blindé selon l'une des revendications 2 ou 3, caractérisé en ce qu'un ventilateur (49) est disposé dans l'ouverture d'évacuation (46).

5. Tableau de distribution électrique blindé selon l'une des revendications 1 à 4, caractérisé en ce que des ventilateurs sont disposés dans les cheminées d'amenée d'air (45).

6. Tableau de distribution électrique blindé selon l'une des revendications 1 à 5, caractérisé en ce que le canal distributeur d'air (40) est réalisé en métal.

7. Tableau de distribution électrique blindé selon l'une des revendications 1 à 5, caractérisé en ce que le canal distributeur d'air (40) est réalisé en matériau isolant.

8. Tableau de distribution électrique blindé selon l'une des revendications 1 à 7, caractérisé en ce que les cheminées d'amenée d'air (45) sont réalisés en métal.

9. Tableau de distribution électrique blindé selon l'une des revendications 1 à 7, caractérisé en ce que les cheminées d'amenée d'air (45) sont réalisés en matériau isolant.
